# EUROPEAN PATENT SPECIFICATION

(11) **EP 0 922 075 B1**
(45) Date of publication and mention of the grant of the patent: **07.11.2001**
(21) Application number: 97936797.6
(22) Date of filing: 18.08.1997
(51) Int. Cl.: C09K 5/04

(54) **REFRIGERANT COMPOSITIONS**
KÜHLMITTELZUSAMMENSETZUNGEN
COMPOSITIONS REFRIGERANTES

(30) Priority: 30.08.1996 GB 9618180
(43) Date of publication of application: 16.06.1999
(73) Proprietor: IMPERIAL CHEMICAL INDUSTRIES PLC, London SW1P 3JF (GB)
(72) Inventor: POWELL, Richard Llewellyn, Tarporley, Cheshire CW6 9NU (GB); CORR, Stuart, Warrington, Cheshire WA4 5DH (GB); MURPHY, Frederick Thomas, Frodsham, Cheshire WA6 7RY (GB); MORRISON, James David, Northwich, Cheshire CW8 2QN (GB)
(74) Representative: Dee, Ian Mark
(86) International application number: GB9702197
(87) International publication number: WO9808911

(56) References cited:
- WO-A-93/11201
- DATABASE WPI Section Ch, Week 9212 Derwent Publications Ltd., London, GB; Class E16, AN 92-091756 XP002048669 & JP 04 033 989 A (DAIKIN KOGYO KK) , 5 February 1992

## Description

This invention relates to compositions which are suitable for refrigeration applications and to the use of such compositions in heat transfer devices such as refrigeration and air conditioning systems. The invention relates, in particular, to non-azeotropic refrigerant compositions which can be used in the applications currently satisfied by trichlorofluoromethane (refrigerant R-11).

Heat transfer devices of the mechanical compression type such as refrigerators, freezers, heat pumps and air conditioning systems are well known. In such devices a refrigerant liquid of a suitable boiling point evaporates at low pressure taking heat from a neighbouring heat transfer fluid. The resulting vapour is then compressed and passes to a condenser where it condenses and gives off heat to another heat transfer fluid. The condensate is then returned through an expansion valve to the evaporator so completing the cycle. The mechanical energy required for compressing the vapour and pumping the liquid may be provided by an electric motor or an internal combustion engine.

In addition to having a suitable boiling point and a high latent heat of vaporisation, the properties preferred of a refrigerant include low toxicity, non-flammability, non-corrosivity, high stability and freedom from objectionable odour.

Hitherto, heat transfer devices have tended to use fully and partially halogenated refrigerants such as bromotrifluoromethane (refrigerant R-13B1), trichlorofluoromethane (refrigerant R-11), dichlorodifluoromethane (refrigerant R-12), chlorodifluoromethane (refrigerant R-22) and the azeotropic mixture of chlorodifluoromethane and chloropentafluoroethane (refrigerant R-115); the azeotrope being refrigerant R-502. Refrigerant R-11, for example, has been widely used in chillers.

However, the fully halogenated chlorofluorocarbons in particular have been implicated in the destruction of the earth's protective ozone layer and as a result the use and production thereof has been limited by international agreement.

Whilst heat transfer devices of the type to which the present invention relates are essentially closed systems, loss of refrigerant to the atmosphere can occur due to leakage during operation of the equipment or during maintenance procedures. It is important, therefore, to replace fully halogenated chlorofluorocarbon refrigerants by materials having low or zero ozone depletion potentials.

In addition to the possibility of ozone depletion, it has been suggested that significant concentrations of chlorofluorocarbon refrigerants in the atmosphere might contribute to global warming (the so-called greenhouse effect). It is desirable, therefore, to use refrigerants which have relatively short atmospheric lifetimes as a result of their ability to react with other atmospheric constituents such as hydroxyl radicals.

Replacements for some of the chlorofluorocarbon refrigerants presently in use have already been developed. These replacement refrigerants tend to comprise selected hydrofluoroalkanes, i.e. compounds which contain only carbon, hydrogen and fluorine atoms in their structure. Thus, refrigerant R-12 is generally being replaced by 1,1,1,2-tetrafluoroethane (R-134a).

WO-93/11202 discloses azeotropic and zeotropic refrigerant compositions. The azeotropic compositions comprise a hydrofluoropropane or hydrofluoroether and a hydrofluorocarbon or a saturated or unsaturated hydrocarbon. The zeotropic compositions comprise a hydrofluoropropane and a hydrofluorocarbon or a saturated or unsaturated hydrocarbon.

JP-4-033-989 discloses a refrigerant composition comprising 1,1,2,2-tetrafluoroethane (R-134) and 1,1,2-trifluoroethane (R-143).

Although suitable replacement refrigerants are available, there is always a need for new refrigerants having a low or zero ozone depletion potential that are capable of replacing the chlorofluorocarbon refrigerants presently in use such as R-11. Furthermore, very real benefits could be realised by a new replacement refrigerant having a higher refrigeration capacity than the chlorofluorocarbon refrigerant it is replacing. It could also be beneficial in certain heat transfer devices to replace the chlorofluorocarbon refrigerant with a non-azeotropic refrigerant blend which not only exhibits a zero ozone depletion potential but which also boils over a reasonably wide temperature range, since in this way the energy efficiency (coefficient of performance) of the device may be increased leading to a reduction in indirect global warming.

The present invention provides a non-azeotropic composition comprising a mixture of compounds having zero ozone depletion potentials which can be used, for example, in chillers as a replacement for refrigerant R-11. The non-azeotropic composition of the invention can boil over a wide temperature range and this property can be exploited to increase the energy efficiency of the equipment in which the composition is used. In addition, the composition of the invention can exhibit an advantageously high refrigeration capacity.

According to the present invention there is provided a non-azeotropic (zeotropic) composition comprising:
(A) from 1 to 40% by weight of 1,1,1,2-tetrafluoroethane (R-134a) ; and
(B) from 100 to 99% by weight of at least one hydrofluorocarbon having a boiling point in the range of from 5 to 40°C.

The present invention also provides a heat transfer device, such as a chiller, comprising an evaporator, a condenser, a compressor and an expansion valve in which there is contained a refrigerant composition comprising:
(A) from 1 to 40% by weight of 1,1,1,2-tetrafluoroethane (R-134a) ; and
(B) from 100 to 99 % by weight of at least one hydrofluorocarbon having a boiling point in the range of from 5 to 40°C.

The zeotropic composition of the invention comprises at least two separate components.

The first component (component (A)) comprises 1,1,1,2-tetrafluoroethane (R-134a), which has a boiling point of about -26.5°C

The second component (component (B)) comprises at least one hydrofluorocarbon having a boiling point in the range of from 5 to 40°C. In a preferred embodiment, the at least one hydrofluorocarbon making up component (B) has a boiling point in the range of from 10 to 35°C, more particularly in the range of from 10 to 30°C and especially in the range of from 15 to 30°C. Although component (B) may comprise a mixture of two or more hydrofluorocarbons, it will preferably comprise just one such compound.

Suitable hydrofluorocarbons for component (B) may be selected from 1,1,2,2,3-pentafluoropropane (R-245ca) which has a boiling point of about 25°C, 1,1,1,3,3-pentafluoropropane (R-245fa) which has a boiling point of about 15°C, 1,1,1,2,2,3,3,4,4-nonafluorobutane (R-329ccb) which has a boiling point of about 15°C, 1,1,1,2,2,3-hexafluoropropane (R-236cb) which has a boiling point of about 15°C, 1,1,1,2,2,4,4,4-octafluorobutane (R-338cfa) which has a boiling point of about 18°C, and 1,1,1,4,4,4-hexafluorobutane (R-356ffa) which has a boiling point of about 26°C. In a preferred embodiment, the at least one hydrofluorocarbon making up component (B) is selected from R-245ca and R-356ffa and in a particularly preferred embodiment component (B) is R-245ca.

It is apparent that the boiling point of R-134a, which makes up component (A), is appreciably lower than the boiling point of the at least one hydrofluorocarbon making up component (B) which means that the composition of the invention is capable of boiling and condensing over a wide temperature range, i.e. it can exhibit a wide temperature glide in both the evaporator and condenser.

The amounts of R-134a and of the at least one hydrofluorocarbon having a boiling point in the range of from 5 to 40°C which are contained in the zeotropic composition of the invention are in the range of from 1 to 40% by weight of R-134a and from 60 to 99 % by weight of the hydrofluorocarbon(s) having a boiling point in the range of from 5 to 40°C.

The composition of the invention is suitable as a replacement for refrigerant R-11.

A particularly preferred composition of the invention in terms of its suitability as a replacement for refrigerant R-11 is one comprising from 1 to 20 % by weight, more particularly from 5 to 15 % by weight, of R-134a and from 80 to 99 % by weight, more particularly from 85 to 95 % by weight, of a hydrofluorocarbon(s) having a boiling point in the range of from 5 to 40°C.

An especially preferred composition of the invention in terms of its suitability as a replacement for refrigerant R-11 is one comprising about 5 % by weight of R-134a and about 95 % by weight of a hydrofluorocarbon(s) having a boiling point in the range of from 5 to 40°C.

Another especially preferred composition of the invention in terms of its suitability as a replacement for refrigerant R-11 is one comprising about 10 % by weight of R-134a and about 90 % by weight of a hydrofluorocarbon(s) having a boiling point in the range of from 5 to 40°C.

When the composition of the invention is to be used as a refrigerant, it may be combined with one or more hydrocarbons in an amount which is sufficient to allow the composition to transport a mineral oil or alkyl benzene type lubricant around a refrigeration circuit and return it to the compressor. In this way, inexpensive lubricants based on mineral oils or alkyl benzenes may be used to lubricate the compressor.

Suitable hydrocarbons for inclusion in the refrigerant composition of the invention are those containing from 2 to 6 carbon atoms, with hydrocarbons containing from 3 to 5 carbon atoms being preferred. Hydrocarbons that will not significantly alter the thermophysical properties of the refrigerant at the level at which they provide for oil transport, such as the linear and branched isomers of butane and pentane are particularly preferred, with pentane being especially preferred.

Where a hydrocarbon is included, it will preferably be present in an amount of from 1 to 10 % by weight on the total weight of the composition.

The refrigerant composition of the invention may also be used in combination with the types of lubricants which have been specially developed for use with hydrofluorocarbon based refrigerants. Such lubricants include those comprising a polyoxyalkylene glycol base oil. Suitable polyoxyalkylene glycols include hydroxyl group initiated polyoxyalkylene glycols, e.g. ethylene and/or propylene oxide oligomers/polymers initiated on mono- or polyhydric alcohols such as methanol, butanol, pentaerythritol and glycerol. Such polyoxyalkylene glycols may also be end-capped with suitable terminal groups such as alkyl, e.g. methyl groups. Another class of lubricants which have been developed for use with hydrofluorocarbon based refrigerants and which may be used in combination with the present refrigerant compositions are those comprising a neopentyl polyol ester base oil derived from the reaction of at least one neopentyl polyol and at least one aliphatic carboxylic acid or an esterifiable derivative thereof. Suitable neopentyl polyols for the formation of the ester base oil include pentaerythritol, polypentaerythritols such as di- and tripentaerythritol, trimethylol alkanes such as trimethylol ethane and trimethylol propane, and neopentyl glycol. The esters may be formed with linear and/or branched aliphatic carboxylic acids, such as linear and/or branched alkanoic acids. Preferred acids are selected from the C₅₋₈, particularly the C₅₋₇, linear alkanoic acids and the C₅₋₁₀, particularly the C₅₋₉, branched alkanoic acids. A minor proportion of an aliphatic polycarboxylic acid, e.g. an aliphatic dicarboxylic acid, may also be used in the synthesis of the ester in order to increase the viscosity thereof. Usually, the amount of the carboxylic acid(s) which is used in the synthesis will be sufficient to esterify all of the hydroxyl groups contained in the polyol, although residual hydroxyl functionality may be acceptable.

The single component refrigerants and azeotropic refrigerant blends which are used in conventional heat transfer devices boil at a constant temperature in the evaporator under constant pressure conditions, and so produce an essentially constant temperature profile across the evaporator. The temperature of the heat transfer fluid being cooled, which may be air or water for example, drops fairly rapidly on first contacting the cold surfaces provided by the refrigerant evaporating in the evaporator owing to the large difference in temperature between that fluid and the evaporating refrigerant. However, since the temperature of the heat transfer fluid is progressively reduced as it passes along the length of the evaporator, there is a progressive reduction in the temperature differential between the fluid and the evaporating refrigerant and a consequent reduction in the heat transfer or cooling rate.

In contrast, the refrigerant composition of the invention is a non-azeotropic (zeotropic) composition which tends to boil over a wide temperature range under constant pressure conditions so as to create a temperature glide in the evaporator which can be exploited to reduce the energy required to operate the heat transfer device, e.g. by making use of the Lorentz cycle. One technique for exploiting the temperature glide involves the use of a heat transfer device equipped with a counter current flow evaporator and/or condenser in which the refrigerant and the heat transfer fluid are caused to flow counter currently to each other. With such an arrangement, it is possible to minimise the temperature difference between the evaporating and condensing refrigerant whilst maintaining a sufficiently high temperature difference between the refrigerant and the external fluid(s) to cause the required heat transfer to take place.

The consequence of minimising the temperature difference between the evaporating and condensing refrigerant in the same system is that the pressure difference is also minimised. As a result, the overall energy efficiency of the system is improved as less energy is consumed to bring about the refrigerant pressure rise from evaporator to condenser conditions.

This increase in the energy efficiency can be optimised by using a zeotropic refrigerant composition which boils and condenses over a temperature range which is equal or approximately equal to the temperature change to which the heat transfer fluid is to be subjected as it flows through the evaporator and condenser.

The zeotropic composition of the present invention may be used to provide the desired cooling in heat transfer devices such as chillers by a method which involves condensing the composition and thereafter evaporating it in a heat exchange relationship with a heat transfer fluid to be cooled. In particular, the composition of the invention may be employed as a replacement for refrigerant R-11 in chillers.

In addition to its use as a refrigerant, the composition of the invention may also be used as an aerosol propellant, as a foam blowing agent for blowing polyolefin, polyurethane and related foams, or as a solvent in degreasing or extraction applications.

The present invention is now illustrated but not limited with reference to the following examples.

### Example 1

The performance of five refrigerant compositions in a refrigeration cycle was evaluated using standard refrigeration cycle analysis techniques in order to assess the suitability thereof as a replacement for R-11. The operating conditions which were used for the analysis were chosen as being typical of those conditions which are found in a chiller or air conditioning system, and counter current flow at the heat exchangers was assumed.

The evaluation involved first defining the inlet and outlet temperatures of the heat transfer fluid, which could be air or water for example, at each heat exchanger (evaporator and condenser). The temperatures in the evaporator and condenser, assuming that a pure (single component) refrigerant was used in the cycle, were then chosen and these temperatures together with the inlet and outlet temperatures of the heat transfer fluid referred to above were used to determine a target log mean temperature difference for each heat exchanger. In the cycle analysis itself, the refrigerant inlet and outlet temperatures at both the evaporator and condenser were adjusted until the target log mean temperature difference was achieved for each heat exchanger. When the target log mean temperature difference for each heat exchanger was achieved, the various properties of the refrigerant composition in the cycle were recorded.

The following refrigerant compositions were subjected to the cycle analysis:
(1) A composition comprising 75 % by weight R-134a and 25 % by weight R-245ca.
(2) A composition comprising 50 % by weight R-134a and 50 % by weight R-245ca.
(3) A composition comprising 25 % by weight R-134a and 75 % by weight R-245ca.
(4) A composition comprising 10 % by weight R-134a and 90 % by weight R-245ca.
(5) A composition comprising 5 % by weight R-134a and 95 % by weight R-245ca.
Compositions (1) and (2) are comparative compositions.
Compositions (3), (4) and (5) are compositions of the invention.

The following operating conditions were used in the cycle analysis.

### EVAPORATOR:

| | |
|---|---|
| Evaporator Temperature : | 5°C |
| Inlet Temperature of Heat Transfer Fluid | 20°C |
| Outlet Temperature of Heat Transfer Fluid | 12°C |
| Log Mean Temperature Difference for Evaporator | 10.5°C |

### CONDENSER:

| | |
|---|---|
| Condenser Temperature: | 32°C |
| Inlet Temperature of Heat Transfer Fluid | 20°C |
| Outlet Temperature of Heat Transfer Fluid | 30°C |
| Log Mean Temperature Difference for Condenser | 5.58°C |
| | |
| Amount of Superheat: | 5°C |
| Amount of Subcooling: | 5°C |
| Isentropic Compressor Efficiency: | 75 % |
| Volumetric Flow through Compressor | 1 m³/s |

The results of analysing the performance of the five refrigerant compositions in a refrigeration cycle using these operating conditions are given in Table 1.

The performance parameters of the refrigerant compositions which are presented in Table 1 and in Table 2, i.e. condenser pressure, evaporator pressure, discharge temperature, refrigeration capacity (by which is meant the cooling duty achieved per unit swept volume of the compressor), coefficient of performance (COP) (by which is meant the ratio of cooling duty achieved to mechanical energy supplied to the compressor), and the glides in the evaporator and condenser (the temperature range over which the refrigerant composition boils in the evaporator and condenses in the condenser), are all art recognised parameters.

The performance of refrigerant R-11 under the same operating conditions is also shown in Table 1 by way of comparison.

It is apparent from Table 1 that refrigerant compositions of the invention containing R-134a and R-245ca boil over a wide temperature range in the evaporator and condense over a wide temperature range in the condenser, i.e. they exhibit wide glide behaviour in both heat exchangers, and that this property can enhance the energy efficiency of the refrigeration process as is evident from the higher values recorded for the coefficient of performance for the refrigerant compositions of the invention as compared to R-134a or R-245ca alone.

Table 1 also shows that the energy efficiency (coefficient of performance) reaches a maximum for a refrigerant composition containing around 10 % by weight R-134a, since such a composition exhibits temperature glides in the evaporator and condenser (8.15°C and 10.15°C respectively) which closely match the change in temperature experienced by the heat transfer fluid on passing through the evaporator and condenser (8°C and 10°C respectively).

It is also apparent from Table 1 that refrigerant compositions of the invention containing R-134a and R-245ca have a higher refrigeration capacity than R-11 and comparable or lower discharge temperatures. Moreover, for compositions containing 5 and 10 % by weight R-134a the evaporator and condenser pressures are comparable to R-11.

It is further evident from the results given in Table 1 that the performance of refrigerant compositions of the invention containing R-134a and R-245ca is such that they could make an acceptable replacement for refrigerant R-11.

### Example 2

The performance of five refrigerant compositions in a refrigeration cycle was evaluated using exactly the same technique and exactly the same operating conditions as described in Example 1.

The following refrigerant compositions were subjected to the cycle analysis:
(1) A composition comprising 75 % by weight R-134a and 25 % by weight R-356ffa.
(2) A composition comprising 50 % by weight R-134a and 50 % by weight R-356ffa.
(3) A composition comprising 25 % by weight R-134a and 75 % by weight R-356ffa.
(4) A composition comprising 10 % by weight R-134a and 90 % by weight R-356ffa.
(5) A composition comprising 5 % by weight R-134a and 95 % by weight R-356ffa.
Compositions (1) and (2) are comparative compositions. Compositions (3), (4) and (5) are compositions of the invention.

The results of analysing the performance of these five refrigerant compositions in a refrigeration cycle are given in Table 2.

The performance of refrigerant R-11 under the same operating conditions is also shown in Table 2 by way of comparison.

It is apparent from Table 2 that refrigerant compositions of the invention containing R-134a and R-356ffa boil over a wide temperature range in the evaporator and condense over a wide temperature range in the condenser, i.e. they exhibit wide glide behaviour in both heat exchangers, and that this property can enhance the energy efficiency of the refrigeration process as is evident from the higher values recorded for the coefficient of performance for the refrigerant compositions of the invention as compared to R-134a or R-356ffa alone.

Table 2 also shows that the energy efficiency (coefficient of performance) reaches a maximum for a refrigerant composition containing around 10 % by weight R-134a, since such a composition exhibits temperature glides in the evaporator and condenser (8.41°C and 12.26°C respectively) which closely match the change in temperature experienced by the heat transfer fluid on passing through the evaporator and condenser (8°C and 10°C respectively).

It is also apparent from Table 2 that the refrigerant compositions tested had a higher refrigeration capacity than R-11 and lower discharge temperatures. Moreover, for compositions containing 5 and 10 % by weight R-134a the evaporator and condenser pressures are comparable to R-11.

It is further evident from the results given in Table 2 that the performance of refrigerant compositions of the invention containing R-134a and R-356ffa is such that they could make an acceptable replacement for refrigerant R-11.

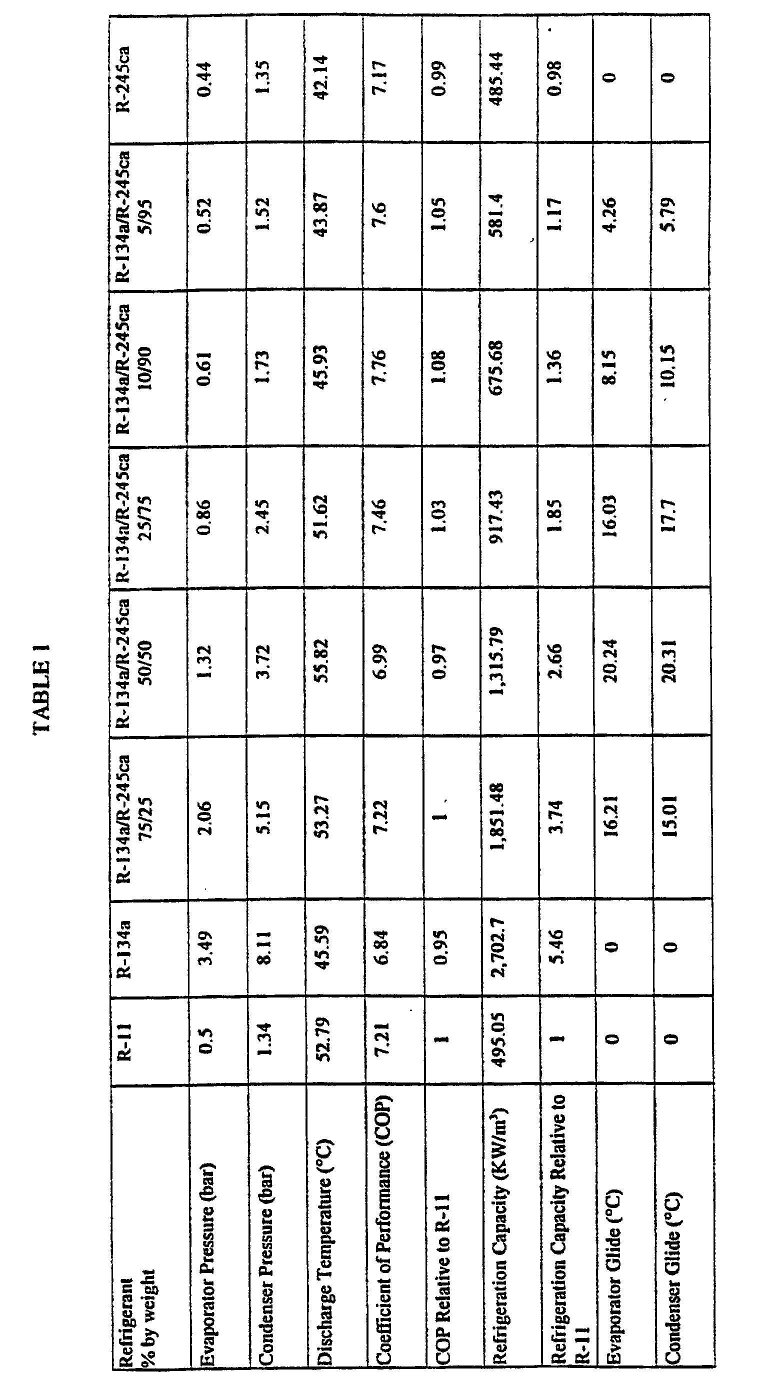

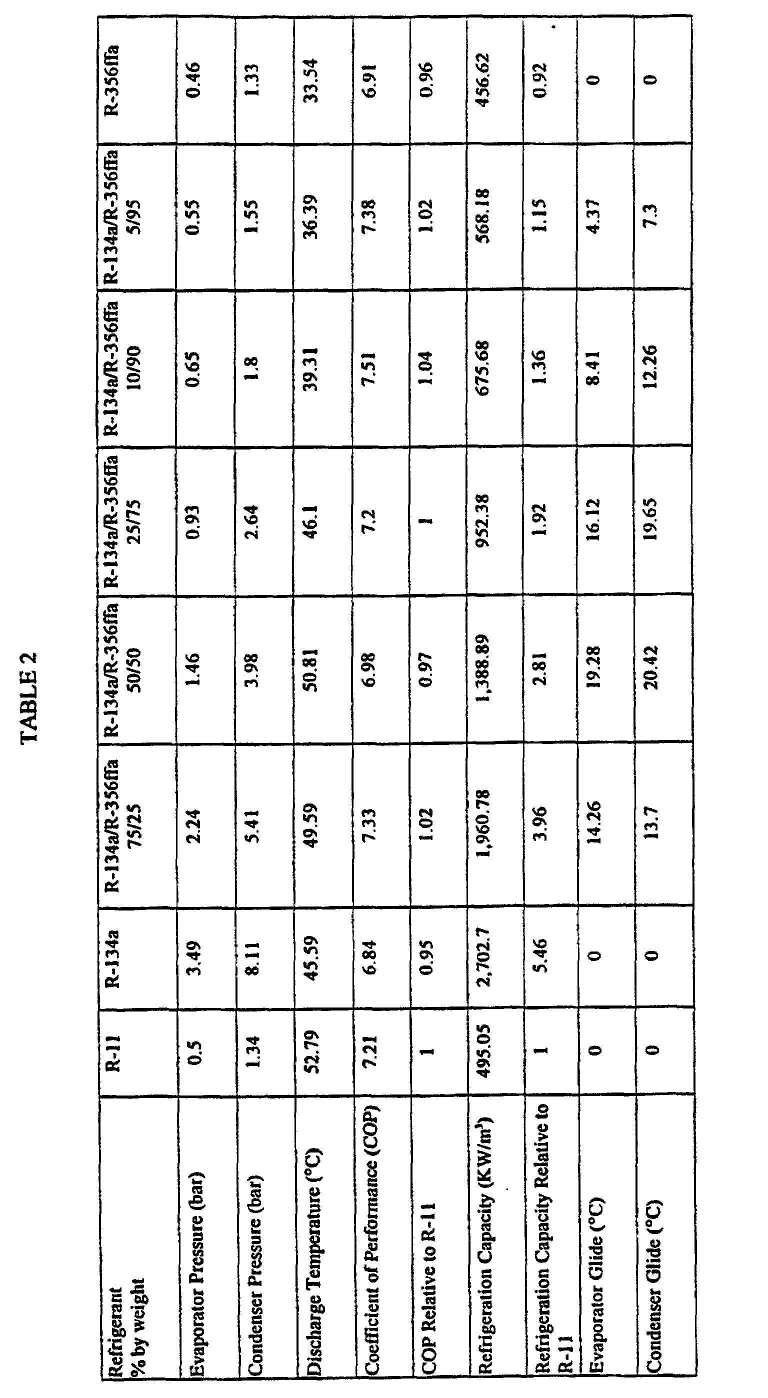

## Claims

1. A non-azeotropic composition comprising:
(A) from 1 to 40% by weight of 1,1,1,2-tetrafluoroethane (R-134a); and
(B) from 60 to 99% by weight of at least one hydrofluorocarbon having a boiling point in the range of from 5 to 40°C.

2. A composition as claimed in claim 1 comprising:
(A) from 1 to 20% by weight of R-134a; and
(B) from 80 to 99% by weight of at least one hydrofluorocarbon having a boiling point in the range of from 5 to 40°C.

3. A composition as claimed in claim 2 comprising:
(A) from 5 to 15% by weight of R-134a; and
(B) from 85 to 95 % by weight of at least one hydrofluorocarbon having a boiling point in the range of from 5 to 40°C.

4. A composition as claimed in claim 3 comprising:
(A) about 5% by weight of R-134a; and
(B) about 95% by weight of at least one hydrofluorocarbon having a boiling point in the range of from 5 to 40°C.

5. A composition as claimed in claim 3 comprising:
(A) about 10% by weight of R-134a and
(B) about 90% by weight of at least one hydrofluorocarbon having a boiling point in the range of from 5 to 40°C.

6. A composition as claimed in any one of claims 1 to 5, wherein component (B) consists of at least one hydrofluorocarbon selected from the group consisting of 1,1,2,2,3-pentafluoropropane (R-245ca), 1,1,1,3,3-pentafluoropropane (R-245fa), 1,1,1,2,2,3,3,4,4-nonafluorobutane (R-329ccb), 1,1,1,2,2,3-hexafluoropropane (R-236cb), 1,1,1,2,2,4,4,4-octafluorobutane (R-338cfa), and 1,1,1,4,4,4-hexafluorobutane (R-356ffa).

7. A composition as claimed in claim 6, wherein component (B) consists of at least one hydrofluorocarbon selected from the group consisting of R-245ca and R-356ffa.

8. A composition as claimed in claim 7, wherein component (B) is R-245ca.

9. A composition as claimed in any one of the preceding claims which additionally comprises at least one hydrocarbon.

10. A composition as claimed in claim 9, wherein the at least one hydrocarbon comprises pentane.

11. A composition as claimed in claim 9 or claim 10 wherein the hydrocarbon is present in an amount of from 1 to 10% by weight on the total weight of the composition.

12. A heat transfer device containing a composition as claimed in any one of claims 1 to 11.

13. A method for providing cooling which comprises condensing a composition as claimed in any one of claims 1 to 11 and thereafter evaporating it in a heat exchange relationship with a heat transfer fluid to be cooled.

14. The use of a composition as claimed in any one of claims 1 to 11 as a replacement for refrigerant R-11.

## Patentansprüche

1. Nicht-azeotrope Zusammensetzung, die umfaßt:
(A) von 1 bis 40 Gew.-% 1,1,1,2-Tetrafluorethan (R-134a); und
(B) von 60 bis 99 Gew.-% wenigstens eines Fluorkohlenwasserstoffs mit einem Siedepunkt im Bereich von 5 bis 40°C.

2. Zusammensetzung nach Anspruch 1, die umfaßt:
(A) von 1 bis 20 Gew.-% R-134a; und
(B) von 80 bis 99 Gew.-% wenigstens eines Fluorkohlenwasserstoffs mit einem Siedepunkt im Bereich von 5 bis 40°C.

3. Zusammensetzung nach Anspruch 2, die umfaßt:
(A) von 5 bis 15 Gew.-% R-134a; und
(B) von 85 bis 95 Gew.-% wenigstens eines Fluorkohlenwasserstoffs mit einem Siedepunkt im Bereich von 5 bis 40°C.

4. Zusammensetzung nach Anspruch 3, die umfaßt:
(A) etwa 5 Gew.-% R-134a; und
(B) etwa 95 Gew.-% wenigstens eines Fluorkohlenwasserstoffs mit einem Siedepunkt im Bereich von 5 bis 40°C.

5. Zusammensetzung nach Anspruch 3, die umfaßt:
(A) etwa 10 Gew.-% R-134a und
(B) etwa 90 Gew.-% wenigstens eines Fluorkohlenwasserstoffs mit einem Siedepunkt im Bereich von 5 bis 40°C.

6. Zusammensetzung nach irgendeinem der Ansprüche 1 bis 5, bei der die Komponente (B) aus wenigstens einem Fluorkohlenwasserstoff besteht, der aus der Gruppe ausgewählt ist, die besteht aus 1,1,2,2,3-Pentafluorpropan (R-245ca), 1,1,1,3,3-Pentafluorpropan (R-245fa), 1,1,1,2,2,3,3,4,4-Nonafluorbutan (R-329ccb), 1,1,1,2,2,3-Hexafluorpropan (R-236cb), 1,1,1,2,2,4,4,4-Octafluorbutan (R-338cfa) und 1,1,1,4,4,4-Hexafluorbutan (R-356ffa).

7. Zusammensetzung nach Anspruch 6, bei der Komponente (B) aus wenigstens einem Fluorkohlenwasserstoff besteht, der aus der Gruppe ausgewählt ist, die besteht aus R-245ca und R-356ffa.

8. Zusammensetzung nach Anspruch 7, bei der Komponente (B) R-245ca ist.

9. Zusammensetzung nach irgendeinem der vorausgehenden Ansprüche, die zusätzlich wenigstens einen Kohlenwasserstoff umfaßt.

10. Zusammensetzung nach Anspruch 9, bei der der wenigstens eine Kohlenwasserstoff Pentan umfaßt.

11. Zusammensetzung nach Anspruch 9 oder Anspruch 10, bei der der Kohlenwasserstoff in einer Menge von 1 bis 10 Gew.-% auf das Gesamtgewicht der Zusammensetzung vorhanden ist.

12. Wärmeübertragungsvorrichtung, die eine Zusammensetzung enthält, wie sie in irgendeinem der Ansprüche 1 bis 11 beansprucht wird.

13. Verfahren zur Bereitstellung einer Kühlung, das das Kondensieren einer Zusammensetzung, wie sie in irgendeinem der Ansprüche 1 bis 11 beansprucht wird, und danach deren Verdampfung in einer Wärmeaustauschbeziehung mit einem zu kühlenden Wärmeübertragungsfluid umfaßt.

14. Verwendung einer Zusammensetzung, wie sie in irgendeinem der Ansprüche 1 bis 11 beansprucht wird, als Austauschprodukt für das Kältemittel R-11.

## Revendications

1. Composition non azéotrope comprenant :
(A) de 1 à 40 % en poids de 1,1,1,2-tétrafluoréthane (R-134a) ; et
(B) de 60 à 99 % en poids d'au moins un hydrofluorocarbure ayant un point d'ébullition dans la plage de 5 à 40 °C.

2. Composition selon la revendication 1, comprenant :
(A) de 1 à 20 % en poids de R-134a ; et
(B) de 80 à 99 % en poids d'au moins un hydrofluorocarbure ayant un point d'ébullition dans la plage de 5 à 40 °C.

3. Composition selon la revendication 2, comprenant :
(A) de 5 à 15 % en poids de R-134a , et
(B) de 85 à 95 % en poids d'au moins un hydrofluorocarbure ayant un point d'ébullition dans la plage de 5 à 40 °C.

4. Composition selon la revendication 3, comprenant :
(A) environ 5 % en poids de R-134a ; et
(B) environ 95 % en poids d'au moins un hydrofluorocarbure ayant un point d'ébullition dans la plage de 5 à 40 °C.

5. Composition selon la revendication 3, comprenant :
(A) environ 10 % en poids de R-134a ; et
(B) environ 90 % en poids d'au moins un hydrofluorocarbure ayant un point d'ébullition dans la plage de 5 à 40 °C.

6. Composition selon l'une quelconque des revendications 1 à 5, dans laquelle le composant (B) est constitué d'au moins un hydrofluorocarbure choisi dans le groupe constitué du 1,1,2,2,3-pentafluoropropane (R-245ca), du 1,1,1,3,3-pentafluoropropane (R-245fa), du 1,1,1,2,2,3,3,4,4-nonafluorobutane (R-329ccb), du 1,1,1,2,2,3-hexafluoropropane (R-236cb), du 1,1,1,2,2,4,4,4-octafluorobutane (R-338cfa), et du 1,1,1,4,4,4-hexafluorobutane (R-356ffa).

7. Composition selon la revendication 6, dans laquelle le composant (B) est constitue d'au moins un hydrofluorocarbure choisi dans le groupe constitué du R-245ca et du R-356ffa.

8. Composition selon la revendication 7, dans laquelle le composant (B) est le R-245ca.

9. Composition selon l'une quelconque des revendications precédentes, qui comprend de plus au moins un hydrocarbure.

10. Composition selon la revendication 9, dans laquelle le au moins un hydrocarbure comprend du pentane.

11. Composition selon la revendication 9 ou la revendication 10, dans laquelle l'hydrocarbure est présent en une quantité allant de 1 à 10 % en poids du poids total de la composition.

12. Dispositif de transfert de chaleur contenant une composition selon l'une quelconque des revendications 1 à 11.

13. Procédé pour fournir un refroidissement qui comprend la condensation d'une composition selon l'une quelconque des revendications 1 à 11 et après cela son évaporation dans une relation d'échange de chaleur avec un fluide de transfert de chaleur à refroidir.

14. Utilisation d'une composition selon l'une quelconque des revendications 1 à 11 en tant que remplaçant du réfrigérant R-11.
